# EUROPÄISCHE PATENTSCHRIFT

(11) **EP 3 585 587 B1**
(45) Veröffentlichungstag und Bekanntmachung des Hinweises auf die Patenterteilung: **16.12.2020**
(21) Anmeldenummer: 18704963.0
(22) Anmeldetag: 09.02.2018
(51) Int. Cl.: B29C 45/27, B29L 31/00

(54) **VERFAHREN ZUM HERSTELLEN EINES HAUSHALTSGERÄTEBAUTEILS IN EINEM KOMBINIERTEN SPRITZGUSSPROZESS MIT EINEM DÜNNWANDSPRITZGIESSEN UND EINEM KASKADEN-SPRITZGIESSEN SOWIE HAUSHALTSGERÄTEBAUTEIL**
PROCESS FOR MANUFACTURING HOUSEHOLD APPLIANCE IN A COMBINATION OF THIN WALL-INJECTION MOLDING AND CASCAD-INJECTION MOLDING AND SUCH A HOUSEHOLD APPLIANCE PRODUCT
PROCÉDÉ DE FABRICATION DE ARTICLE MÉNAGER EN COMBINASION DE MOULAGE PAR INJECTION POUR PAROI FIN ET MOULAGE PAR INJECTION EN CASCADE ET UN ARTICLE MÉNAGER

(30) Priorität: 24.02.2017 DE 102017203052
(43) Veröffentlichungstag der Anmeldung: 01.01.2020
(73) Patentinhaber: BSH Hausgeräte GmbH, 81739 München (DE)
(72) Erfinder: FURTH, Brigitte, 97318 Kitzingen (DE); HOLT, Sven, 89075 Ulm (DE); RAAB, Alfred, 73460 Hüttlingen (DE); HEISSWOLF, Tobias, 89428 Syrgenstein (DE)
(86) Internationale Anmeldenummer: PCT/EP2018/053310
(87) Internationale Veröffentlichungsnummer: WO 2018/153699

(56) Entgegenhaltungen:
- DE-A1-102015 223 585
- JP-A- 2006 256 007

## Beschreibung

Die Erfindung betrifft ein Verfahren zum Herstellen eines Haushaltsgerätebauteils für ein Haushaltsgerät, bei welchem das Haushaltsgerätebauteil aus Kunststoff hergestellt wird. Des Weiteren betrifft die Erfindung auch ein Haushaltsgerätebauteil.

Kunststoffbauteile als Haushaltsgerätebauteile für ein Haushaltsgerät sind umfänglich bekannt. Gerade für Haushaltskältegeräte in Form eines Kühlschranks oder eines Gefriergeräts oder eines Kühl-Gefrier-Kombigeräts sind derartige Haushaltsgerätebauteile beispielsweise als Türabsteller an einer Innenseite einer Tür bekannt. Darüber hinaus sind auch große Bauteile, wie eine Innenverkleidung beziehungsweise eine Innentür der Gesamttür, die zum Verschließen eines Aufnahmeraums für Lebensmittel an einem Gehäuse schwenkbar angeordnet ist, bekannt. Gerade diese Haushaltsgeräte sind relativ groß und werden bei gegenwärtiger Ausgestaltung des Umformens, insbesondere durch ein Thermoformen, hergestellt. Dazu werden zuvor extrudierte Halbzeuge in Form von Platten oder Coils verwendet.

Flächige Haushaltsgerätebauteile können auch mittels eines konventionellen Spritzgießens hergestellt werden. Die Wanddicke dieser Bauteile ist aber nach unten hin begrenzt, da für eine vollständige Füllung des Spritzgusswerkzeugs eine Mindestwanddicke erforderlich ist. Insbesondere bei größeren Bauteilen liegen die Wanddicken wesentlich oberhalb von 1,5 mm. Es wird bei diesen Vorgehensweisen die Schmelze über einen einzigen Anspritzpunkt in das Spritzgusswerkzeug eingebracht. Insbesondere bei derartig großen herzustellenden Haushaltsgerätebauteilen, die auch über große Bereiche flächig bzw. eben ausgebildet sind, ist bei herkömmlichen Herstellungsprozessen die Wanddicke nach unten hin begrenzt. Dies auch dahingehend, dass die Schließkräfte für das Spritzgusswerkzeug sehr groß sind. Auch dauert durch diese relativ große Wanddicke das Abkühlen der Schmelze sehr lang.

Daher wird bei der gegenwärtigen Fertigungstechnik besonders bei großen Bauteilen auch aus wirtschaftlichen Gründen das Thermoformen dem Spritzgießen vorgezogen.

Es ist Aufgabe der vorliegenden Erfindung, ein Verfahren zu schaffen, mittels welchem spezifische Geometriebereiche eines Haushaltsgerätebauteils durch ein Spritzgießen verbessert hergestellt werden können. Insbesondere ist es auch Aufgabe, ein entsprechendes Haushaltsgerätebauteil zu schaffen.

Diese Aufgabe wird durch ein Verfahren und ein Haushaltsgerätebauteil gemäß den unabhängigen Ansprüchen gelöst.

Ein Aspekt der Erfindung betrifft ein Verfahren zum Herstellen eines Haushaltsgerätebauteils für ein Haushaltsgerät, bei welchem dieses Haushaltsgerätebauteil vollständig aus Kunststoff durch Spritzgießen hergestellt wird. Das Spritzgießen wird zumindest phasenweise als ein Kombinationspritzgießen durchgeführt, wobei dazu ein Dünnwandspritzgießen und ein Kaskaden-Spritzgießen durchgeführt wird. Mit dem Kombinationsspritzgießen wird zumindest ein als Hohlkörper ausgebildeter Teilbereich des Haushaltsgerätebauteils hergestellt. Durch ein derartiges Verfahren können spezifische Geometriebereiche eines Haushaltsgerätebauteils formpräzise und auch filigraner hergestellt werden, wobei dennoch die Stabilität und mechanische Belastbarkeit aufrecht erhalten ist. Durch die Kombination spezifischer Einzelspritzgusstechnikgen werden auch bei den sehr formkomplexen Geometriebereichen in Form von Hohlkörpern sehr dünnen Wanddicken ermöglicht. Das Haushaltsgerätebauteil kann dadurch auch gewichtsreduziert erzeugt werden.

Durch ein derartiges Verfahren wird somit das Haushaltsgerätebauteil als Ganzes und insbesondere der Hohlkörper dünnwandig ausgebildet und durch die bei dem Kaskaden-Spritzgießen erforderlichen mehreren Anspritzpunkte das Einbringen der Schmelze ermöglicht. Durch diese spezifische Kombination wird in besonders neuartiger und vorteilhafter Weise auch erreicht, dass Zuhaltekräfte des Spritzgusswerkzeugs bei der Herstellung des Haushaltsgerätebauteils relativ niedrig gehalten werden können. Insbesondere, da an manchen Stellen die eingespritzte Schmelze schon erstarrt ist und an anderen Stellen die Schmelze noch nicht oder gerade erst eingespritzt wird. Dies bedeutet auch, dass Spritzgusswerkzeuge verwendet werden können, die auch bei bisheriger üblicher Technik, die limitiert war, verwendet werden können. Durch die Reduzierung der Wanddicke des Haushaltsgerätebauteils ergibt sich einerseits eine Reduktion der erforderlichen Zuhaltekräfte. Da bei der Verwendung nur eines Anspritzpunktes bei einer derartigen dünnwandigen Ausgestaltung jedoch dann wiederum Nachteile beim Einspritzen der Schmelze und da bei relativ großen Bauteilen im Hinblick auf das unerwünschte frühzeitige Aushärten an der einen Stelle und das nicht ausreichende Verbringen der Schmelze an alle Stellen auftritt, wäre hier wiederum ein relativ großer Einspritzdruck erforderlich, was wiederum zu erhöhten Zuhaltekräften für das Spritzgusswerkzeug führen würde. Des Weiteren wäre bei einer derartigen Ausgestaltung dann der Nachteil dahingehend zu sehen, dass beim Abkühlen und somit einem gewissen Schrumpfen des Kunststoffes ein Nachspritzen zum Auffüllen nur bedingt und/oder wiederum mit hohem Druck erforderlich wäre, was wiederum zu hohen Zuhaltekräften führt.

Durch die Erfindung wird mit dem Kaskaden-Spritzgießen und somit mehreren Anspritzpunkten unter der Bedingung des Dünnwandspritzgießens auch dieses Problem gelöst. Durch die mehreren Anspritzpunkte kann ein zu frühzeitiges dennoch sehr schnelles Aushärten an spezifischen Stellen der Schmelze verhindert werden und es kann somit auch ein relativ gleichmäßiges Einbringen der Schmelze erfolgen, so dass das Aushärten auf der einen Seite und das Verbringen der Schmelze an alle Stellen im Spritzgusswerkzeug zur vollständigen finalen Formgebung des zu erzeugenden Haushaltsgerätebauteils erreicht wird. Dies ist gerade bei der Erzeugung von Hohlkörpern als Teilbereiche des Haushaltsgerätebauteils von wesentlichem Vorteil. Durch die mehreren Anspritzpunkte wird dann auch die durch die dünnwandige Herstellung bereits einhergehende Reduzierung der erforderlichen Zuhaltekräfte des Spritzgusswerkzeugs noch begünstigt. Dieses neuartige Vorgehen in Form der Kombination von zwei ganz spezifischen Spritzgussvorgehensweisen lassen sich dann auch Spritzgusswerkzeuge und Maschinen verwenden, die bezüglich der wirtschaftlichen Herstellung des Haushaltsgerätebauteils vorteilhaft sind und in dem Zusammenhang niedrigere Zuhaltekräfte ausreichen. Da gerade diese Maschinen und Spritzgusswerkzeuge im Hinblick auf ihre dann jeweilige maximale Zuhaltekraft ein erheblicher Kostenfaktor in den Fertigungsanlagen sind, kann in dem Zusammenhang ein besonderer Vorteil durch die Erfindung erreicht werden. Es müssen somit insbesondere gegenüber der bereits oben erwähnten Spritzgussfertigung von derartig größeren Haushaltsgerätebauteilen, die dann jedoch nur dickwandig hergestellt werden können, keine anderweitigen, mit höheren Zuhaltekräften beaufschlagbaren Spritzgusswerkzeuge verwendet werden, im Gegenteil es können auch diese herkömmlichen Geräte und Maschinen eingesetzt werden. Durch die Erfindung kann dann auch das primäre Einspritzen von Schmelze in Anspritzpunkten erfolgen und gleichzeitig ein nachfüllendes Einspritzen von Schmelze in Anspritzpunkten erfolgen, über welche die vorher dort primär eingespritzte Schmelze im Spritzgusswerkzeug schon abgekühlt ist.

Die Erfindung ist in dem Zusammenhang besonders vorteilhaft für relativ große Haushaltsgerätebauteile, die große Anteile an ebenen oder im Wesentlichen ebenen Flächenbereichen aufweisen und des Weiteren dann formkomplexe Hohlkörper aufweisen. Da gerade bei derartig geometrisch spezifischen Haushaltsgerätebauteilen, wie dies beispielsweise bei Hohlkörper aufweisende Innenverkleidungen beziehungsweise Innentüren einer Tür eines Haushaltskältegeräts der Fall ist, das herkömmliche Spritzgießen, wie es eingangs erläutert wurde, nicht wirtschaftlich ist, wird dem mit der Erfindung entgegengetreten.

Vorzugsweise wird das Dünnwandspritzgießen während des Spritzgießvorgangs mit einem charakteristischen Parameter betreffend das Wanddicken-Fließweg-Verhältnis von größer 1:200 durchgeführt. Besonders vorteilhaft wird dieses Dünnwandspritzgießen mit einem Wanddicken-Fließweg-Verhältnis zwischen größer 1:200 und größer 1:300 durchgeführt. Durch einen derartigen Wert beziehungsweise ein Werteintervall des charakterisierenden Parameters lassen sich die oben genannten Vorteile im besonderen Maße erreichen. Gerade bei den dann größeren herzustellenden Bauteilen mit großen flächigen Bereichen kann dann auch ein bevorzugtes Maß der Dünnwandigkeit mit gleichzeitiger ausreichender Aushärtung der Schmelze und dennoch ausreichender Geschwindigkeit der Fließfronten erzielt werden. Dadurch wird der Hohlkörper des Haushaltsgerätebauteils formgenau und dünnwandig erzeugt, wobei die Zuhaltekräfte insbesondere auch in der Abkühlphase, die dann auch aufgrund der Dünnwandigkeit wiederum kürzer ist, relativ gering gehalten werden können.

Es werden den Hohlkörper begrenzende Wände durch das Kombinationspritzgießen mit dem Dünnwandspritzgießen und dem Kaskaden-Spritzgießen mit einer Wanddicke kleiner 1,5 mm, insbesondere zwischen 0,6 mm und 1 mm, hergestellt.

Es wird der Hohlkörper als länglicher Holm bzw. als Kufe hergestellt. Gerade diese Formgebung in Verbindung mit der hohlen Ausgestaltung ist mit bisherigen Verfahren nur sehr globig und Formunpräzise erzeugbar. Da derartige Geometriebereiche beispielsweise bei Innenverkleidungen einer Tür eines Haushaltskältegeräts sehr wichtig sind, da sie zur Aufnahme weiterer Komponenten, wie beispielsweise Türabsteller vorgesehen sind, müssen diese Holme auch sehr stabil und dennoch kompakt aufgebaut sein, um nicht Platz zu verschwenden. Gerade mit dem Kombinationsspritzgießen ist dies sehr vorteilhaft ermöglicht.

Vorzugsweise werden zwei Seitenwände der Holmform des Hohlkörpers an ihren freien Ende durch das Kombinationspritzgießen mit dem Dünnwandspritzgießen und dem Kaskaden-Spritzgießen mit einem Abstand kleiner oder gleich 14 mm, insbesondere zwischen 11 mm und 14 mm, hergestellt. Dadurch können sehr enge Hohlkörper gebildet werden, die wenig Platz in der Breite benötigen und dennoch ausreichend mechanisch belastbar sind.

Vorzugsweise werden zwei Seitenwände der Holmform des Hohlkörpers an ihren an eine Bodenwand der Rinnenform mündenden Enden durch das Kombinationspritzgießen mit dem Dünnwandspritzgießen und dem Kaskaden-Spritzgießen mit einem Abstand kleiner oder gleich 7 mm, insbesondere zwischen 5 mm und 6,5 mm, hergestellt. Gerade der Rinnenboden und somit im Querschnitt senkrecht zur Längsachse des Hohlkörpers ist dieser Hohlkörper sehr schmal und dennoch gerade an diesen Stellen auch stabil herstellbar, wodurch ein sehr Breitenreduzierter Hohlkörper geschaffen wird.

Insbesondere wird ein Übergang zwischen einer Außenseite einer Seitenwand und einer Außenseite einer an das freie Ende der Seitenwand mündenden Außenseite eines weiteren Teilbereichs des Haushaltsgerätebauteils durch das Kombinationspritzgießen mit dem Dünnwandspritzgießen und dem Kaskaden-Spritzgießen mit einem Radius kleiner oder gleich 1,5mm, insbesondere zwischen 1 mm und 1,5 mm, hergestellt. Dadurch lassen sich sehr scharfe und lokal sehr begrenzte Übergangsbereiche herstellen, wodurch unerwünschte globige Wulste oder Formunpräzisionen vermieden werden können.

Insbesondere wird in Richtung einer Längsachse des Hohlkörpers an einem Ende des Hohlkörpers eine Frontwand ausgebildet, welche an eine Bodenwand des Hohlkörpers mündet, wobei ein Übergang zwischen einer Außenseite der Frontwand und einer Außenseite der Bodenwand durch das Kombinationspritzgießen mit dem Dünnwandspritzgießen und dem Kaskaden-Spritzgießen mit einem Radius kleiner oder gleich 2,5 mm, insbesondere zwischen 1,5 mm und 2,0 mm, hergestellt . Zusätzlich oder anstatt dazu wird ein Übergang zwischen einer Außenseite der Frontwand und einer Außenseite einer an das freie Ende der Frontwand mündenden Außenseite eines weiteren Teilbereichs des Haushaltsgerätebauteils durch das Kombinationspritzgießen mit dem Dünnwandspritzgießen und dem Kaskaden-Spritzgießen mit einem Radius kleiner oder gleich 1,0 mm, insbesondere zwischen 0,4 mm und 1,0 mm, hergestellt. Durch derart kleine Radien wird der Hohlkörper sehr formgenau hergestellt und gerade Kantenbereiche können dadurch sehr schmal bzw. scharf und filigran erzeugt werden.

Vorzugsweise wird an einer Außenseite einer Seitenwand des Hohlkörpers eine dem Hohlbereich des Hohlkörpers abgewandte Aufnahmestruktur, insbesondere eine Haltenocke, durch das Kombinationspritzgießen mit dem Dünnwandspritzgießen und dem Kaskaden-Spritzgießen hergestellt. Dadurch kann ein integriertes Zusatzelement an dem Hohlkörper erzeugt werden, an dem eine weitere separate Komponente einfach befestigt werden kann. Beispielsweise kann an dieser Nocke ein Türabsteller eines Haushaltskältegeräts befestigt werden. Auch diese Nocke kann durch das Kombinationsspritzgießen sehr formpräzise und filigran mit dennoch hoher mechanischer Stabilität erzeugt werden.

Vorzugsweise wird in dem Hohlbereich des Hohlkörpers zumindest eine Versteifungsrippe durch das Kombinationspritzgießen mit dem Dünnwandspritzgießen und dem Kaskaden-Spritzgießen hergestellt wird. Dadurch kann der Hohlkörper innen versteift werden, wobei gerade durch das Kombinationsspritzgießen in dieser schwer zugänglichen Stelle eine relativ dünne Rippe ortsgenau hergestellt werden kann.

Alle diese Aspekte können mit herkömmlichen Verfahren, wie Thermoumformen oder normalem Spritzgießen nicht realisiert werden, da diese Hohlkörper nicht oder nur mit sehr hohen Wanddicken und Formunpräzisionen erzeugt werden können, so dass sie gerade für spezifische Einsatzzwecke, beispielsweise als Bauteile einer Tür eines Haushaltskältegeräts nicht tauglich sind. Bei dem herkömmlichen Verfahren sind die Bauteile relativ schwer und/oder an den spezifischen und von Flächenbereichen (im wesentlichen Ebenenbereiche) abweichenden Geometriebereichen nicht ausreichend stabil. Schmale Geometriebereiche die insbesondere Hohlkörper sind, können hier nicht hergestellt werden. Unter schmal wird ein spezifisches Verhältnis zwischen einer Hohlkörperbreite zu Hohlkörperhöhe (jeweils senkrecht zu einer Längsachse des Hohlkörpers betrachtet) verstanden. Als schmal werden Hohlkörper mit einem diesbezüglichem Verhältnis von 1:4 oder kleiner, also bspw. 1:5 etc., verstanden. Bei herkömmlichen Verfahren, wie sie genannt wurden, treten bei der Erzeugung von Hohlkörpern auch Faltungen und somit ganz spezifische Formunpräzisionen auf, die ebenfalls unerwünscht sind.

Des Weiteren ist bei genannten herkömmlichen Verfahren die Stabilität von schmalen Holmen geringer als die von normalen Holmen. Grund hierfür sind zum einen die Gesetzmäßigkeiten aus der Mechanik. Zusätzlich ist aber das Thema der kompletten Einschäumung sehr wichtig. Damit ist bei Haushaltskältegeräten gemeint, dass das Haushaltsgerätebauteil mit einem Isolationsschaum insbesondere im Bereich des Hohlkörpers beaufschlagt wird. Die Festigkeit des Holms bei einer Kühlgeräte-Innentür wird hauptsächlich durch den Schaum im Inneren des Holms definiert. Bei sehr schmalen Holmen kann der Schaum den Holm nicht komplett füllen und dieser bleibt teilweise leer. Die Festigkeit ist bei einer Teilfüllung bei herkömmlichen Haushaltsgerätebauteilen nicht ausreichend. Die Breite des Holms ist daher dort durch die Schäumbarkeit nach unten hin begrenzt, wodurch sich kein schmales Bauteil, insbesondere ohne anderweitige Einschränkungen, herstellen lässt.

Vorzugsweise wird vorgesehen, dass für das Kaskaden-Spritzgießen in Richtung der Längsachse des Haushaltsgerätebauteils betrachtet von der Mehrzahl von Anspritzpunkten zumindest ein Anspritzpunkt mittig vorgegeben wird. Über diesen zumindest einen mittigen Anspritzpunkt wird ein Einspritzen einer Schmelze des Kunststoffmaterials in ein Spritzgusswerkzeug zumindest zeitweise vor dem Einspritzen der Schmelze in zumindest einen anderen, entlang der Längsachse des Haushaltsgerätebauteils betrachtet außermittig vorgegebenen Anspritzpunkt begonnen. Auch dies ist eine sehr vorteilhafte Vorgehensweise einerseits im Hinblick auf die Lage der Anspritzpunkte, andererseits im Hinblick auf die Reihenfolge, wie die Schmelze an welchen konkreten Anspritzpunkten wann eingespritzt wird. Gerade dann, wenn die Dünnwandigkeit erzeugt wird treten durch diese konkreten Vorgänge die oben genannten Vorteile nochmals verbessert auf.

Es kann vorgesehen sein, dass der zumindest eine mittige Anspritzpunkt auch in Breitenrichtung, die senkrecht zur Längsachse des Haushaltsgerätebauteils orientiert ist, eine mittige Positionierung vorgesehen ist. Dadurch wird auch durch diese dann einen mittigen Anspritzpunkt eine symmetrische Lage vorgegeben, die in Richtung der Längsachse und in Richtung der Breite des Haushaltsgerätebauteils auch eine symmetrische Verteilung der Schmelze ermöglicht.

Es wird insbesondere vorgesehen, dass der zumindest eine mittige Anspritzpunkt und der zumindest eine außermittig vorgegebene Anspritzpunkt auf einer gemeinsamen Gerade liegen, die der Längsachse entspricht oder parallel zu dieser Längsachse verläuft.

Vorzugsweise wird ein Zeitpunkt des Beginns eines Einspritzens in einen außermittig vorgegebenen Anspritzpunkt abhängig von der Art der einzuspritzenden Schmelze und/oder abhängig von der Art der in den zumindest einen mittigen Anspritzpunkt eingespritzten Schmelze und/oder einem entlang der Längsachse bemessenen Abstand zwischen dem zumindest einen mittigen Anspritzpunkt und dem außermittigen Anspritzpunkt und/oder dem Durchmesser des zumindest einen mittigen Anspritzpunkts und/oder dem Durchmesser des außermittigen Anspritzpunkts und/oder von der Anzahl von außermittigen Anspritzpunkten, die auf gleicher Längslage entlang der Längsachse zu diesem außermittigen Anspritzpunkt und/oder den Einspritzdruck der Schmelze in den zumindest einen ersten mittigen Anspritzpunkt und/oder in den vorgesehenen Einspritzdruck in den außermittigen Anspritzpunkt und/oder der Menge der in den zumindest einen mittigen Anspritzpunkt eingespritzten Schmelze und/oder der vorgesehenen Menge der in den außermittigen Anspritzpunkt einzuspritzenden Schmelze und/oder einer Zeitdauer eines Einspritzens einer Schmelze über den mittigen Anspritzpunkt vorgegeben wird.

Zusätzlich oder anstatt dazu kann auch vorgesehen sein, dass ein Zeitpunkt des Endes eines Einspritzens in einen außermittig vorgegebenen Anspritzpunkt abhängig von der Art der einzuspritzenden Schmelze und/oder abhängig von der Art der in den zumindest einen mittigen Anspritzpunkt eingespritzten Schmelze und/oder einem entlang der Längsachse bemessenen Abstand zwischen dem zumindest einen mittigen Anspritzpunkt und dem außermittigen Anspritzpunkt und/oder dem Durchmesser des zumindest einen mittigen Anspritzpunkts und/oder dem Durchmesser des außermittigen Anspritzpunkts und/oder von der Anzahl von außermittigen Anspritzpunkten, die auf gleicher Längslage entlang der Längsachse zu diesem außermittigen Anspritzpunkt und/oder den Einspritzdruck der Schmelze in den zumindest einen ersten mittigen Anspritzpunkt und/oder in den vorgesehenen Einspritzdruck in den außermittigen Anspritzpunkt und/oder der Menge der in den zumindest einen mittigen Anspritzpunkt eingespritzten Schmelze und/oder der vorgesehenen Menge der in den außermittigen Anspritzpunkt einzuspritzenden Schmelze und/oder einer Zeitdauer eines Einspritzens einer Schmelze über den mittigen Anspritzpunkt vorgegeben wird.

Das Kaskaden-Spitzgießen wir dadurch sehr präzise bezüglich der einzubringenden Schmelze und der Anspritzpunkte vollzogen, so dass die Geschwindigkeit der Fließfronten der Schmelze und dem gewünschten Abkühlen an spezifischen Stellen sehr abgestimmt erfolgt und dadurch auch bei unterschiedlichsten Haushaltsgerätebauteilen, insbesondere mit großen eben oder im wesentlichen ebenen Flächenbereichen im Verhältnis zur Gesamtgröße des Haushaltsgerätebauteils die schnelle und formgenaue Fertigung mit relativ kleinen Zuhaltekräften des Spritzgusswerkzeugs ermöglicht ist.

Durch diese Flexibilität im Hinblick auf die Betrachtung unterschiedlichster Parameter, die bezüglich dem Zeitpunkt des Beginns des Einspritzens auf einen außermittig vorgegebenen Anspritzpunkt und/oder bezüglich dem Zeitpunkt eines Endes eines Einspritzens der Schmelze in diesen außermittig vorgegebenen Anspritzpunkt berücksichtigt werden können, ergeben sich individuellste Abstimmungsszenarien für die Herstellung eines Haushaltsgerätebauteils. Damit kann im Hinblick auf die Form und insbesondere die Größe des Haushaltsgerätebauteils ein äußerst feinjustiertes und somit genaues Einstellen zumindest von einem dieser Zeitpunkte erfolgen. Der Herstellungspräzision des Haushaltsgerätebauteils im Hinblick auf die homogene Wanddicke wird dadurch vorteilhaft Rechnung getragen. Es lässt sich hier im Hinblick auf Anforderungen, möglichst geringe Zuhaltekräfte beim Spritzgusswerkzeug zu ermöglichen und somit insbesondere herkömmliche Zuhaltekräfte und entsprechende Spritzgusswerkzeuge zu verwenden, ein individuell abgestimmter Einspritzprozess steuern. Unerwünscht hohe Zuhaltekräfte oder Zuhaltekraftspitzen können dadurch vermieden werden.

Durch diese oben genannte vorteilhafte Ausführung kann durch die Feinjustierung des Einspritzvorgangs und die somit entsprechende Steuerung über eine Steuereinheit der Fertigungsanlage auch ein möglicher Ausschussanteil von Haushaltsgerätebauteilen deutlich reduziert werden.

Insbesondere wird zu zumindest dem einen mittigen Anspritzpunkt in eine erste Richtung entlang der Längsachse zumindest ein erster außermittiger Anspritzpunkt vorgegeben und ausgehend von dem zumindest einen mittigen Anspritzpunkt wird in einer zur ersten Richtung entgegengesetzte zweite Richtung entlang der Längsachse des Haushaltsgerätebauteils zumindest ein zweiter, außermittiger Anspritzpunkt vorgegeben. Auf das Einspritzen der Schmelze in den zumindest einen mittigen Anspritzpunkt wird das Einspritzen einer Schmelze in den zumindest einen ersten und den zumindest einen zweiten außermittigen Anspritzpunkt zumindest zeitweise, insbesondere vollständig, gleichzeitig durchgeführt. Dadurch wird der Befüllungsvorgang des Spritzgusswerkzeugs mit der Schmelze in zwei Richtungen, die entgegengesetzt der Längsachse verlaufen, insbesondere synchron durchgeführt. Der Fertigungsfortschritt erfolgt daher in zwei entgegengesetzte Richtungen gleichzeitig, so dass in Richtung der Längsachse betrachtet zu den jeweiligen gegenüberliegenden Enden des herzustellenden Haushaltsgerätebauteils hin auch gleichzeitig das Schmelzmaterial gebracht wird, so dass der Einbringungsprozess und das jeweils sukzessive nachfolgende Aushärten an jeweils zu der Mitte in Richtung der Längsachse betrachtet gegenüberliegenden Stellen hin ebenfalls synchron erfolgt. Auch dadurch werden die oben genannten Vorteile nochmals begünstigt, da die Fließfronten in zwei entgegengesetzte Richtungen verlaufen und aufgrund der erfolgenden Einbringens diese Richtung an diesen Stellen und dem dann jeweils erfolgenden Aushärten auch hier wiederum die Zuhaltekräfte des Spritzgusswerkzeugs möglichst klein gehalten werden können.

In einer vorteilhaften Ausführung wird für das Kaskaden-Spritzgießen in Richtung der Längsachse des Haushaltsgerätebauteils betrachtet von der Mehrzahl von Anspritzpunkten zumindest zwei Anspritzpunkte auf gleicher Längslage und an gegenüberliegenden Seiten der Längsachse und somit senkrecht zur Längsachse vorgegeben, wobei über diese zumindest zwei entlang der Längsachse gleich liegenden Anspritzpunkte gleichzeitig eine Schmelze des Kunststoffmaterials in ein Spritzgusswerkzeug eingespritzt wird. Dadurch wird auch im Hinblick auf die senkrecht zur Längsachse bemessene Breite des Haushaltsgerätebauteils eine Verbesserung der Herstellung erzielt, und die bereits oben genannten Vorteile sind hier ebenfalls gegeben.

Gerade bei breiteren Haushaltsgerätebauteilen kann insbesondere bezüglich breiteren Flächenbereichen durch diese in Breitenrichtung mehrere Anspritzpunkte auch wiederum das Einbringen des Schmelzmaterials, das Aushärten des Schmelzmaterials und das erforderliche Nachspritzen verbessert erfolgen und diesbezüglich dann mit möglichst kleinen und minimierten Zuhaltekräften des Spritzgusswerkzeugs.

Vorzugsweise wird vorgesehen, dass das Haushaltsgerätebauteil insbesondere zumindest im Bereich des Hohlkörpers und somit auch der Hohlkörper selbst, durch die Kombination des Dünnwandspritzgießens und des Kaskaden-Spritzgießens, welches gleichzeitig durchgeführt wird, mit einer Wanddicke kleiner 1,5 mm und besonders vorteilhaft zwischen 0,6 mm und 1 mm hergestellt wird. Bei herkömmlichen Spritzgussmöglichkeiten können allenfalls minimale Wanddicken von 2,5 mm hergestellt werden. Durch die Erfindung beziehungsweise vorteilhafte Ausführungen davon kann gerade bei sehr großen Haushaltsgerätebauteilen mit insbesondere relativ großen, ebenen Flächenbereichen oder im Wesentlichen ebenen Flächenbereichen eine erhebliche Wanddickenreduktion erzielt werden und somit überhaupt erst ein Dünnwandbereich ausgebildet werden, wobei die Dünnwandigkeit hier sehr gering ausfällt. Dies wirkt gerade bei solchen spezifischen Haushaltsgerätebauteilen mit dann mehreren Anspritzpunkten des Kaskaden-Spritzgießens besonders vorteilhaft auf die erforderlichen Zuhaltekräfte des Spritzgusswerkzeugs nicht nur beim primären Einspritzen der Schmelze, sondern auch beim Aushärten bzw. Abkühlen und insbesondere auch beim ggf. nachfolgenden Nachspritzen aufgrund des Schrumpfens der ausgehärteten Schmelze.

Nicht nur durch diese vorteilhafte Ausführung kann auch aufgrund der Dünnwandigkeit dass Abkühlen schneller erfolgen, wodurch auch ein erforderliches Nachspritzen zeitnah erfolgen kann, sondern es kann aufgrund dieser Reduktionszeit der Abkühlung dann auch der Zuhalteprozess des Spritzgusswerkzeugs zeitlich reduziert werden, was wiederum Vorteile auf die Anforderungen auf das Spritzgusswerkzeug im Hinblick auch auf den Energieverbrauch der Fertigung hat, so dass auch der Fertigungsvorgang energieeffizienter erfolgen kann.

Vorzugsweise ist vorgesehen, dass für das Kaskaden-Spritzgießen zumindest vier Anspritzpunkte vorgegeben werden. Abhängig von der Ausgestaltung des zu fertigenden Haushaltsgerätebauteils und insbesondere von dessen Größe, vorzugsweise von dessen Größe des ebenen oder im Wesentlichen ebenen Flächenbereichs, kann dann die Anzahl der Anspritzpunkte auch größer 10, insbesondere größer 30, insbesondere größer 50, insbesondere größer 70, insbesondere größer 90 und gegebenenfalls auch bis zu 100 Anspritzpunkten oder mehr vorgegeben werden.

In einer besonders vorteilhaften Ausführung wird als Haushaltsgerätebauteil ein wannenförmiges Haushaltsgerätebauteil hergestellt. Insbesondere wird in dem Zusammenhang eine Innenverkleidung beziehungsweise eine Innentür einer zum Verschließen eines Aufnahmeraums für Lebensmittel ausgebildeten Tür eines Haushaltsgeräts mit zumindest einem Hohlkörper hergestellt. Gerade für diese spezifischen Haushaltsgerätebauteile kann somit ein im Hinblick auf den Fertigungsablauf verbessertes Verfahren bereitgestellt werden. Bezüglich der Verbesserungen darf auf die bereits oben genannten Vorteile nochmals verwiesen werden.

In einer vorteilhaften Weise wird ein Wannenboden des wannenförmigen Haushaltsgerätebauteils mit einem viereckigen Flächenbereich mit einer ersten Seitenlänge, insbesondere einer Breite, von zumindest 30cm und/oder einer zweiten Seitenlänge, insbesondere einer Höhe, von zumindest 25cm durch das Kombinationsspritzgießen einstückig mit dem Hohlkörper hergestellt. Derartige Haushaltsgerätebauteile mit somit relativ großen Flächenbereichen können durch das Kombinationsspritzgießen bezüglich der Reduktion der Zeitdauer des Herstellungsprozesses insbesondere der Abkühlzeit der Schmelze, bezüglich der Anforderungen an die Zuhaltekräfte des Spritzgusswerkzeugs als auch im Hinblick auf die Konturenscharfe und vollständige Einbringung der Schmelze auch in Randbereichen mit diesbezüglich geringeren Einspritzdrücken der Schmelze erreicht werden.

Vorzugsweise werden Anspritzpunkte für das Kaskaden-Spritzgießen abhängig von der Größe des herzustellenden wannenförmigen Haushaltsgerätebauteils vorgegeben. Insbesondere werden Anspritzpunkte dieses Kaskaden-Spritzgießens abhängig von der Größe des ebenen oder im Wesentlichen ebenen Flächenbereichs eines Wannenbodens des Haushaltsgerätebauteils vorgegeben. Da gerade diese geometrisch spezifischen Sonderbereiche eines derartigen Haushaltsgerätebauteils bezüglich der Einspritzstellen, der Einspritzdrücke, der Verteilung der Schmelze im Hinblick auf das gegebenenfalls zu schnelle oder zu langsame und somit unerwünschte Aushärten und dem gegebenenfalls erforderlichen Anstieg der Zuhaltekräfte des Spritzgusswerkzeugs wesentlich sind, kann hierauf sehr situationsbedingt reagiert werden und durch die vorteilhafte Ausführung auch hier einerseits die Dünnwandigkeit und andererseits durch die gezielten örtlichen Anspritzpunkte dem entgegengewirkt werden.

Bei einer weiteren vorteilhaften Ausführung wird vorgesehen, dass die Anzahl der Anspritzpunkte entlang einer Längsachse des Haushaltsgerätebauteils und/oder die Lage der Anspritzpunkte abhängig von der Größe des herzustellenden wannenförmigen Haushaltsgerätebauteils vorgegeben wird. Auch hier wird diese Vorgabe insbesondere abhängig von der Größe des ebenen oder zumindest im Wesentlichen ebenen Flächenbereichs eines Wannenbodens des Haushaltsgerätebauteils vorgegeben. Die bereits oben für die anderweitigen Ausgestaltungen dargelegten Vorteile gelten hier entsprechend.

In einer weiteren vorteilhaften Ausführung wird vorgesehen, dass die Anzahl der Anspritzpunkte paarweise und an gegenüberliegenden Seiten zu einer Längsachse und somit in Breitenrichtung zur Längsachse des wannenförmigen Haushaltsgerätebauteils vorgegeben wird und die Anzahl dieser Anspritzpunkt-Paare abhängig von der Größe des herzustellenden wannenförmigen Haushaltsgerätebauteils vorgegeben wird. Auch bei dieser Ausgestaltung wird diese Anzahl der Anspritzpunkt-Paare abhängig von der Größe des ebenen oder im Wesentlichen ebenen Flächenbereichs eines Wannenbodens des Haushaltsgerätebauteils vorgegeben. Auch hier gelten dann wiederum die bereits oben genannten Vorteile entsprechend.

In einer vorteilhaften Ausführung wird eine Zuhaltekraft zum Zuhalten eines Spritzgusswerkzeugs beim Spritzgießen des Haushaltsgerätebauteils mit der Kombination und somit dem gleichzeitigen Durchführen des Dünnwandspritzgießens und dem Kaskaden-Spritzgießen auf einen Wert kleiner oder gleich einem Gewicht von 1700 Tonnen entsprechend begrenzt. Insbesondere ist diese Zuhaltekraft auf einen Wert kleiner oder gleich einem Gewicht von 1600 Tonnen entsprechend begrenzt. Dies ist eine sehr vorteilhafte Ausführung, da somit Spritzgusswerkzeuge eingesetzt werden können, bei denen diese genannten konkreten Zuhaltekräfte dann auch insbesondere als Maximalzuhaltekräfte bereitgestellt werden können. Dadurch können Spritzgusswerkzeuge für die Herstellung verwendet werden, die wesentlich kleiner und auch kostengünstiger in der Beschaffung und auch im Betrieb im Vergleich zu Spritzgusswerkzeugen sind, die deutlich höhere Zuhaltekräfte ermöglichen. Da hier gerade diese genannten Kosten für Spritzgusswerkzeuge mit Zuhaltekräften nicht nur linear sondern stärker dazu ansteigen, fließen derartige Nachteile auch wesentlich in die Produktionskosten und somit die Umsetzungsmöglichkeit in ein Fertigungsverfahren mit derartigen Spritzgusswerkzeugen ein. Gerade durch die Erfindung oder eine vorteilhafte Ausgestaltung davon ist es nunmehr auch ermöglicht, deutlich kostengünstigere Spritzgusswerkzeuge mit niedrigeren maximalen Zuhaltekräfte zu verwenden und dennoch die oben genanten und insbesondere sehr großen und mit großen ebenen oder im Wesentlichen ebenen Flächenbereichen charakterisierten Haushaltsgerätebauteile herzustellen. Dies war mit der bisherigen Spritzgusstechnik nicht möglich. Die Kombination der Dünnwandspritzgießtechnik mit der Kaskaden-Spritztechnik ermöglicht gerade bei diesbezüglich genannten spezifischen, insbesondere wannenförmigen Haushaltsgerätebauteilen Zuhaltekräfte derart zu reduzieren, dass herkömmliche und darüber hinaus sogar Spritzgussmaschine mit kleineren Zuhaltekräften eingesetzt werden können.

Es wird durch diese Erfindung auch ermöglicht, dass diese niedrigen Zuhaltekräfte, insbesondere kleiner oder gleich einem Wert entsprechend einem Gewicht von 1700 Tonnen nicht nur für den primären Einspritzvorgang der Schmelze ausreichen, sondern auch dann für das Zuhalten während des Abkühlens und auch dem möglicherweise erforderlichen Nachspritzen der Schmelze aufgrund der Schrumpfung bei dem Abkühlen.

Insbesondere wird, wie bereits oben erwähnt, als ein Haushaltsgerätebauteil eine Innenverkleidung beziehungsweise eine Innentür einer Tür für ein Haushaltskältegerät hergestellt. Diese weisen üblicherweise aufgrund ihrer Wannenform einen relativ großen ebenen oder im Wesentlichen ebenen Flächenbereich in Form des Wannenbodens auf, so dass hier die eingangs genannten Problemstellungen besonders zum Tragen kommen, andererseits durch die erfindungsgemäße Lösung eine vorteilhafte Herstellung auch dieser spezifischen Haushaltsgerätebauteile nun ermöglicht ist und zwar im Rahmen des Spritzgießens.

Des Weiteren betrifft die Erfindung auch ein Haushaltsgerätebauteil, welches gemäß der Erfindung oder einer vorteilhaften Ausgestaltung davon hergestellt ist. Durch das erfindungsgemäße Verfahren ist auch nunmehr bei diesen spezifischen Haushaltsgerätebauteilen gerade im Bereich des Hohlkörpers eine deutlich reduzierte Wanddicke, nämlich eine Dünnwand ermöglicht und dennoch eine ausreichende vollständige Füllung mit der Schmelze und eine ausreichende Nachdruckwirkung bei schneller Herstellung ermöglicht. Gerade für herzustellende Haushaltsgerätebauteile, bei denen die maximalen Fließwege der einzubringenden Schmelze oberhalb von 200 mm liegen, kann nunmehr auch die Wanddicke deutlich kleiner als 1,5 mm ermöglicht werden. Wird beispielsweise ein sehr leicht fließender Kunststoff als Schmelze verwendet, so kann ein Abstand von Anspritzpunkten entlang der Längsachse des Haushaltsgerätebauteils betrachtet und/oder senkrecht zu der Längsachse und somit in Breitenrichtung des Haushaltskältegeräts betrachtet größer vorgenommen werden. Dadurch wird die erforderliche Anzahl von Anspritzpunkten bezogen auf eine feste Bauteilgröße reduziert.

Durch das gleichzeitige beziehungsweise auch kombinierte Kaskaden-Spritzgießen wird die Befüllung des Spritzgusswerkzeugs mit der Schmelze auch bei dieser Dünnwandtechnik nicht gleichzeitig über alle Anspritzpunkte durchgeführt, sondern eben nacheinander und somit kaskadiert. Die einzelnen Kaskadenstufen werden dabei als Sequenzzonen bezeichnet.

Für das Einbringen der Schmelze in das Spritzgusswerkzeug und somit den Füllvorgang können, wie bereits oben angesprochen, vielfältigste unterschiedliche und sehr situationsbezogene, für das jeweils herzustellende Haushaltsgerätebauteil spezifizierte Aktivierungen und Deaktivierungen der einzelnen Sequenzzonen vorgenommen werden. Die Steuerung der Sequenzzonen kann beispielsweise auch über das Einspritzvolumen, den Einspritzweg, die Einspritzzeit, den Einspritzdruck oder die Position der Fließfront der Schmelze in der Kavität beziehungsweise dem Spritzgusswerkzeug erfolgen.

In einer vorteilhaften Ausführung wird die Bestimmung der Position der Fließfront in dem Spritzgusswerkzeug beispielsweise über die Messung des lokalen Werkzeuginnendrucks oder der lokalen Werkzeugwandtemperatur durchgeführt.

Dazu können ein Sensor oder entsprechende Sensoren an der Oberfläche des Spritzgusswerkzeugs vorgesehen sein. Wird beispielsweise dann ein vorgegebener Temperaturschwellwert überschritten, so kann auf die genaue Lage der Fließfront innerhalb des Spritzgusswerkzeugs geschlossen werden. Durch die Erfindung sind die erzielbaren reinen Wanddicken und somit die Dünnwandausgestaltung unabhängig von der Größe des zu fertigenden Haushaltsgerätebauteils. Darüber hinaus kann auch vorgesehen, dass Oberflächen des herzustellenden Haushaltsgerätebauteils komplett oder zumindest bereichsweise individuell strukturiert werden können, wobei hier beispielsweise unterschiedliche Glanzgrade oder matte Oberflächen erzeugt werden können. Ein Sensor kann auch in der Wand des Spritzgusswerkzeugs integriert und somit vollständig von dem Material der Wand umgeben sein.

Es ist bevorzugt vorgesehen, dass die Lage einer Fließfront abhängig von einem oder mehreren Einspritzzeiten an einem oder mehreren Anspritzpunkten bestimmt wird.

Vorzugsweise ist wird das Haushaltsgerätebauteil zumindest bereichsweise aus PP (Polypropylen) hergestellt, insbesondere vollständig aus PP hergestellt. Gerade dieses Material ermöglicht bei der Dünnwandigkeit und den mehreren Anspritzpunkten mit seinen Fließeigenschaften - PP ist leicht fließend - die genannten Vorteile besonders zu erfüllen, insbesondere, wenn große Haushaltsgerätebauteile mit großen eben bzw. im wesentlichen ebenen Flächenbereichen erzeugt werden.

In einer weiteren, sehr vorteilhaften Ausführung kann auch vorgesehen sein, dass das Haushaltsgerätebauteil nicht nur aus einem einzigen Kunststoffmaterial hergestellt wird, sondern aus zumindest zwei verschiedenen Kunststoffmaterialien gefertigt wird. Ein derartiges dann zumindest 2K-Haushaltsgerätebauteil kann gerade im Hinblick auf die unterschiedlichen Anspritzpunkte sehr präzise aus den dann jeweils örtlich erforderlichen unterschiedlichen Kunststoffmaterialien erzeugt werden.

Durch das erfindungsgemäße Verfahren oder eine vorteilhafte Ausgestaltung davon können nicht nur geometrische, sondern auch von der Größe her vielfältigste Haushaltsgerätebauteile erzeugt werden. Beispielsweise können kleine dünnwandige Haushaltsgerätebauteile mit relativ großen und ebenen oder im Wesentlichen ebenen Flächenbereichen und formspezifischen Hohlkörpern erzeugt werden. So können diese Haushaltsgerätebauteile mit einer Höhe bis zu 30 cm, einer Breite bis zu 15 cm und einer Wanddicke kleiner 1 mm, insbesondere zwischen 0,5 mm und 0,9 mm, insbesondere 0,8 mm, hergestellt werden. Es können jedoch aber auch diesbezüglich noch größere Haushaltsgerätebauteile hergestellt werden, die mit einer Höhe von 180 cm oder größer ausgebildet werden können, mit einer Breite zwischen 60 cm und 90 cm, insbesondere 80 cm, und insbesondere einer Wanddicke kleiner 1 mm, vorzugsweise zwischen 0,5 mm und 0,9 mm, insbesondere 0,8 mm, hergestellt werden. Es sind jedoch auch jegliche Zwischenwerte der genannten Höhen und/oder Breiten und/oder Wanddicken als weitere Ausführungen alleine oder in Kombination möglich.

Durch die Erfindung wird es, wie bereits oben erwähnt, ermöglicht, eine signifikante Reduzierung der ansonsten für derartige Bauteile erforderlichen Schließkräfte beziehungsweise Zuhaltekräfte der Spritzgussmaschine beziehungsweise des Spritzgusswerkzeugs zu erreichen. Bei konventionellen herkömmlichen Spritzgusstechniken wirkt der Fülldruck beziehungsweise der Nachdruck gleichzeitig auf der gesamten projizierten Fläche des herzustellenden Bauteils. Für die Herstellung größerer Bauteile mittels des konventionellen Spritzgießens sind daher Spritzgießmaschinen mit sehr großen Schließkräften erforderlich. Durch das erfindungsgemäße Verfahren kann die erforderliche Schließkraft bei gleicher Bauteilgröße bis zu 80 Prozent reduziert werden, insbesondere bei wannenartigen Haushaltsgerätebauteilen, die einen im Vergleich zum restlichen Bereich des Haushaltsgerätebauteils sehr großen ebenen oder im Wesentlichen ebenen Flächenbereich aufweisen.

Aufgrund der darüber hinaus einhergehenden erzeugten nur geringen Wanddicken und somit der Dünnwandigkeit erstarren die zuerst gefüllten Bauteilbereiche schon während des Füllvorgangs. Dies ist ein wesentlicher Vorteil. Zum Zeitpunkt der vollständigen Füllung des Spritzgusswerkzeugs mit der Schmelze sind bereits größere Bereiche des herzustellenden Haushaltsgerätebauteils erstarrt. Die Innendrücke wirken jedoch nur in den Bereichen, in denen noch die Schmelze vorliegt und somit das flüssige Kunststoffmaterial noch vorhanden ist. Somit wirkt der Innendruck nur auf einem Teilbereich der gesamten projizierten Bauteilfläche. Um ein Einfallen des Bauteils oder einzelner Bauteilbereiche durch die Wärmeschwindung des Kunststoffs beim Abkühlen zu verhindern, wird beim konventionellen Spritzgießen nach der vollständigen Füllung das herzustellende Bauteil mit Nachdruck beaufschlagt.

Bei der Erfindung mit dem kombinierten Dünnwandspritzgießen und dem Kaskaden-Spritzgießen ist dieser Nachdruck nach der vollständigen Füllung für die bereits erstarrten Bauteilbereiche wirkungslos. Der Nachdruck für diese Bauteilbereiche wird bereits bei der Bauteilfüllung durch den Fülldruck gewährleistet, was ein weiterer wesentlicher Vorteil der Erfindung ist. Der Fülldruckt wirkt in diesem Fall zum einen bei der Füllung quasi nach vorne und somit in Richtung der sich ausbreitenden Fließfront, und als Nachdruck quasi nach hinten. Die signifikante Reduzierung der Schließkräfte ist nur durch die Kombination von Dünnwandtechnik und Kaskaden-Spritzgießen für flächige Bauteilgeometrien der herzustellenden Haushaltsgerätebauteile gegeben.

Durch die Dünnwanderzeugung sind die Kühlzeiten drastisch reduziert und durch die flächigen Bauteilgeometrien in Verbindung mit den zeitlich gestaffelten Anspritzpunkten ist eine gleichzeitige Füllwirkung als auch eine Nachdruckwirkung ermöglicht. Es kann also während des Herstellungsverfahrens und somit zu Zeitpunkten, zu denen das gesamte Kunststoffmaterial noch nicht eingebracht ist, an gewissen Stellen über gewisse Anspritzpunkte noch das primäre Einbringen der Schmelze erfolgen, und gleichzeitig an anderen Stellen, bei denen die zuvor eingebrachte Schmelze bereits abgekühlt ist, ein Nachdruck durchgeführt werden.

Darüber hinaus ist es durch die Erfindung auch ermöglicht, dass für eine Familie von Haushaltsgerätebauteilen, die sich in dem Zusammenhang formgleich darstellen daher nur in der Größe unterscheiden, der grundlegende Aufbau des Spritzgusswerkzeugs genutzt werden kann. Denn bei entsprechenden Haushaltsgerätebauteilen mit unterschiedlichen Dimensionen kann die Anzahl der genutzten Anspritzpunkte des Spritzgusswerkzeugs frei gewählt werden. So ist es beispielsweise dann auch möglich, für ein diesbezüglich kleineres Haushaltsgerätebauteil dieser Familie nur die Hälfte der vorhandenen Anspritzpunkte zu nutzen. Für ein Haushaltsgerätebauteil der Bauteilfamilie, welches demgegenüber größer ist, können dann mehrere Anspritzpunkte dieses Stammwerkzeugs genutzt und bedient werden. Für eine Bauteilfamilie ist es somit denkbar, dass nur ein Spritzgießwerkzeug mit mehreren Wechselplatten erforderlich ist, anstatt mehrerer kompletter separater Spritzgießwerkzeuge.

Durch die Erfindung ist es somit auch ermöglicht, dass neben den technischen Vorteilen auch die Stückkosten reduziert werden können. Darüber hinaus sind eine höhere Bauteilqualität sowie ein höherer konstruktiver Freiheitsgrad inklusive mit mehreren Designoptionen für zusätzliche Elemente gegeben. So können bezüglich der höheren Freiheitsgrade individuelle konstruktive Merkmale einfacher und filigraner als auch in Formvarianten gestaltet werden, als dies beispielsweise mit einem Thermoformen ermöglicht ist. So können beispielsweise integrierte erhaben abstehende Nocken filigraner gestaltet werden. Es kann in dem Zusammenhang beispielsweise vorgesehen sein, dass die Nocke nicht mehr als komplette erhabene höckerartige Struktur realisiert ist, sondern lediglich die Erhebung durch einen umlaufenden filigranen Rand beziehungsweise eine umlaufende Konturenlinie realisiert ist. Diese kann dann mit gleicher Stabilität und mit mindestens gleicher Formpräzision erzeugt werden.

Die Erfindung betrifft auch ein Haushaltskältegerät mit einem gemäß dem Verfahren hergestellten Haushaltsgerätebauteil.

Mit Angaben "oben", "unten", "vorne", "hinten, "horizontal", "vertikal", "Tiefenrichtung", "Breitenrichtung", "Höhenrichtung" etc. sind die bei bestimmungsgemäßen Gebrauch und bestimmungsgemäßem Anordnen des Geräts und bei einem dann vor dem Gerät stehenden und in Richtung des Geräts blickenden Beobachter gegebenen Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltsgeräts mit einer Ausführungsform eines erfindungsgemäßen Haushaltsgerätebauteils;
- Fig. 2: eine perspektivische Darstellung eines Ausführungsbeispiels eines Haushaltsgerätebauteils;
- Fig. 3: eine perspektivische Darstellung eines Teilbereichs von Fig. 2;
- Fig. 4: eine Schnittdarstellung eines Teilbereichs des Haushaltsgerätebauteils gemäß Fig. 2 und Fig. 3 im Bereich eines Hohlkörpers des Haushaltsgerätebauteils; und
- Fig. 5: eine weitere Schnittdarstellung des Haushaltsgerätbauteils im Bereich des Hohlkörpers.

In den Figuren werden gleiche oder funktionsgleiche Elemente mit den gleichen Bezugszeichen versehen.

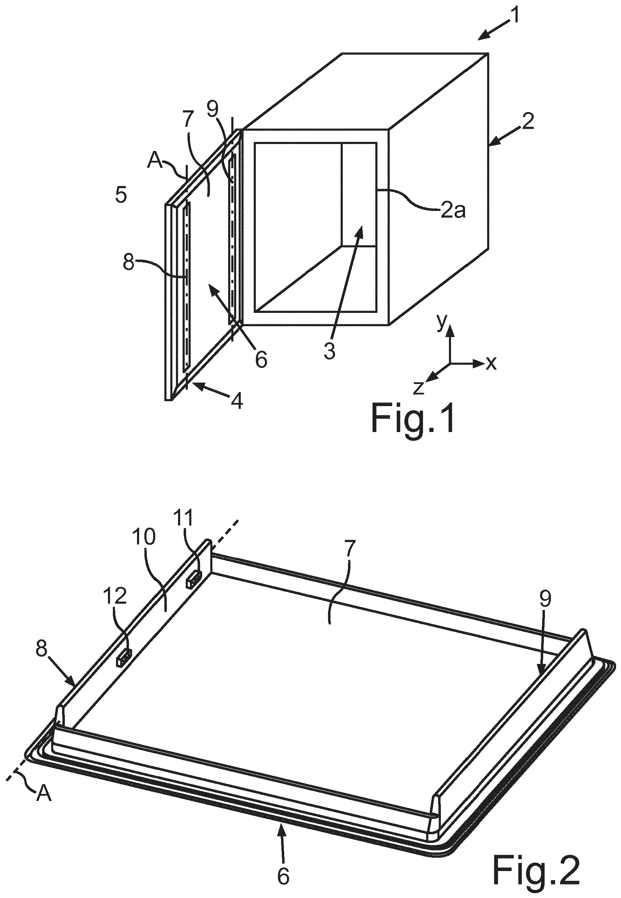

In Fig. 1 ist in einer perspektivischen vereinfachten Darstellung ein Haushaltsgerät 1 gezeigt, welches ein Haushaltskältegerät ist und beispielsweise ein Kühlgerät oder ein Gefriergerät oder ein Kühl-Gefrier-Kombigerät sein kann. Das Haushaltsgerät 1 ist zur Aufnahme von Lebensmitteln ausgebildet und weist ein Gehäuse 2 auf, in dem ein entsprechender Aufnahmeraum 3 ausgebildet ist. Der Aufnahmeraum 3 ist durch Wände eines Innenbehälters 2a begrenzt. Frontseitig ist der Aufnahmeraum 3 durch eine Tür 4 verschließbar, welche schwenkbar an dem Gehäuse 2 angeordnet ist. Die Tür 4 ist mehrteilig aufgebaut und weist eine Außentür 5 und eine Innentür auf, die eine Innenverkleidung 6 darstellt. Die Innenverkleidung 6 ist ein sichtseitiges Bauteil der Tür 4 und somit ein außenliegendes Bauteil. Im geschlossenen Zustand der Tür 4 ist diese Innenverkleidung 6 dem Aufnahmeraum 3 zugewandt. Diese Innenverkleidung 6 ist einstückig aus Kunststoff ausgebildet und stellt ein wannenartiges Haushaltsgerätebauteil dar. Zwischen der Außentür 5 und der Innenverkleidung 6 ist zumindest bereichsweise ein thermisch isolierendes Material, insbesondere ein Isolationsschaum, eingebracht, der nicht sichtseitig vorliegt, sondern durch die Außentür 5 und die Innenverkleidung 6 verdeckt ist.

An der Innenverkleidung 6 können darüber hinaus auch noch andere Komponenten, beispielsweise zumindest ein Türabsteller, welcher nicht dargestellt ist, angeordnet sein.

Das Haushaltsgerätebauteil in Form der wannenartigen Innenverkleidung 6 wird durch ein Spritzgießen hergestellt, wobei bei diesem Spritzgießen zumindest zeitweise während des Herstellungsprozesses ein Kombinationsspritzgießen durchgeführt wird. Dazu wird zumindest phasenweise gleichzeitig ein Dünnwandspritzgießen und ein Kaskaden-Spritzgießen durchgeführt. Das Dünnwandspritzgießen wird dabei insbesondere mit einem Wanddicken-Fließweg-Verhältnis von größer 1:200, insbesondere zwischen größer 1:200 und 1:300 durchgeführt.

Wie aus der schematischen Darstellung in Fig. 1 bereits zu erkennen ist, ist ein überwiegend großer Bereich dieser Ausmaße des Haushaltsgerätebauteils ein ebener oder im Wesentlichen ebener Flächenbereich, der hier durch einen Wannenboden 7 eines wannenförmigen Grundteils der Innenverkleidung 6 gebildet ist.

An diesem Wannenboden 7 sind im gezeigten Ausführungsbeispiel vorzugsweise zwei längliche Holme 8 und 9 ausgebildet, die von der Ebene des Wannenbodens 7 abstehend orientiert sind. Die Holme 8,9 sind an einer dem Wanneninnenraum abgewandten Außenseite ausgebildet und erstrecken sich somit diesem Wanneninnenraum abgewandt. Diese beiden Holme 8 und 9 sind insbesondere geradlinig ausgebildet und der Anordnung an der Tür4 in Höhenrichtung orientiert. Die Holme 8 und 9 sind einstückig an der Innenverkleidung 6 bei diesem Kombinationsspritzgießen mithergestellt. Diese beiden Holme 8 und 9 erstrecken sich bei geschlossener Tür 4 in Richtung des Aufnahmeraums 3. Sie können im Wesentlichen über die gesamte Höhe der Innenverkleidung 6 oder aber auch nur in Teilabschnitten davon ausgebildet sein. Die beiden Holme 8 und 9 sind parallel zueinander ausgebildet und an gegenüberliegenden Seitenbereichen der Innenverkleidung 6 ausgebildet. Die Home 8 und 9 sind zu der dem Aufnahmeraum 3 abgewandten Seite und somit bei der Ausgestaltung der Tür 4 der Außentür 5 zugewandt hohl ausgebildet. Die diesbezüglichen Hohlkörper in Form der Holme 8 und 9 sind somit zu dieser Außentür 5 hin auch offen ausgebildet.

Die Holme 8 und 9 stellen daher rinnenartige Hohlkörper dar und werden durch das Kombinationsspitzgießen entsprechend hergestellt.

Insbesondere sind die Holme 8 und 9, vorzugsweise die gesamte Innenverkleidung 6, durch ein Spritzgießen hergestellt, wobei hier zumindest phasenweise ein Kombinationsspritzgießen als ein Dünnwandspritzgießen und ein Kaskaden-Spritzgießen durchgeführt wird und mit diesem Kombinationsspritzgießen zumindest ein als Hohlkörper ausgebildeter Teilbereich des Haushaltsgerätebauteils hergestellt wird und somit die Holme 8 und 9 der Innenverkleidung 6 entsprechend hergestellt werden. Das Kombinationsspritzgießen umfasst somit die beiden unterschiedlichen Einzelspritzgießtechniken, nämlich das Dünnwandspritzgießen und das Kaskaden-Spritzgießen.

Durch diese erhabenen und formspezifizierten Holme 8 und 9 können dann Aufnahmen für weitere separate Komponenten, die an der Innenverkleidung 6 angebracht werden können, ausgebildet werden. Insbesondere kann an diesen Holmen 8 und 9 ein Türabsteller befestigt werden. Eine anderweitige Anbringung eines Türabstellers, beispielsweise an dem Wannenboden 7 selbst, ist dann nicht vorgesehen. Durch diese Holme 8 und 9 wird eine einfache und dennoch mechanisch stabile Befestigungsmöglichkeit für derartige anderweitige Komponenten geschaffen.

Es kann dazu vorgesehen sein, wie dies bei der vergrößerten Darstellung der Innenverkleidung 6 in Fig. 2 zu erkennen ist, dass an einer Begrenzungswand 10 eines Holms 8 zumindest eine zusätzliche Struktur bzw. ein Zusatzelement integriert ausgebildet ist, um die Befestigung einer weiteren Komponente, insbesondere eines Türabstellers, weiter vorteilhaft zu gestalten. Insbesondere kann dieses Zusatzelement eine Aufnahmestruktur sein, die insbesondere eine Haltenocke 11 ist. In Fig. 2 sind beispielhaft zwei Haltenocken 11 und 12 an dieser Begrenzungswand bzw. Seitenwand 10 angeformt.

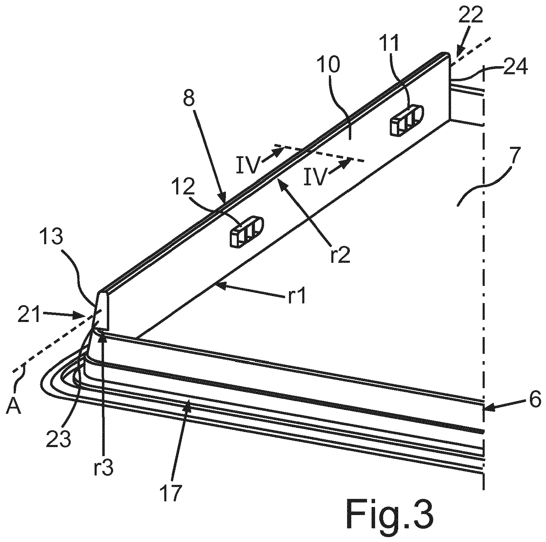

In Fig. 3 ist eine Teildarstellung der Innenverkleidung 6 gemäß Fig. 2 gezeigt. Es ist hier die Darstellung des länglichen und als Hohlkörper ausgebildeten Holms 8 dargestellt. Dieser Holm 8 weist eine dem gegenüberliegenden Holm 9 zugewandte Seitenwand 10 und eine weitere, separate Seitenwand 13 auf.

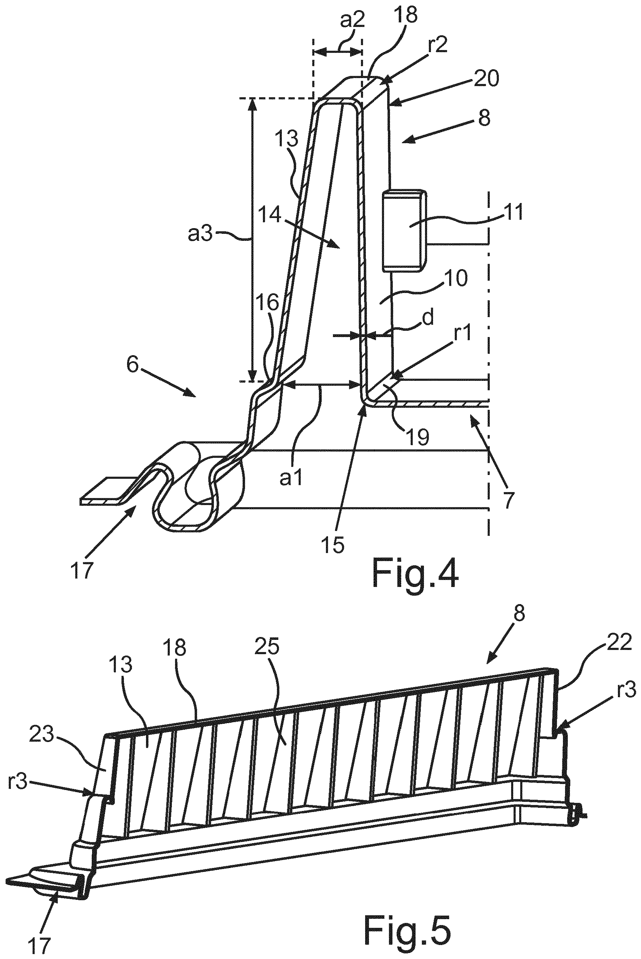

Wie in einer Schnittdarstellung entlang der Schnittlinie IV-IV in Fig. 3 in der Darstellung in Fig. 4 zu erkennen ist, sind diese Seitenwände 10 und 13 so zueinander orientiert, dass sie einen Hohlbereich 14 des als Hohlkörper ausgebildeten Holms 8 begrenzen. Beide Seitenwände 10 und 13 sind mit einer Wanddicke d kleiner 1,5 mm, insbesondere zwischen 0,6 mm und 1 mm durch das Kombinationsspritzgießen mit dem Dünnwandspritzgießen und dem Kaskaden-Spritzgießen hergestellt.

Durch das Kombinationsspritzgießen ist es auch ermöglicht, dass nicht nur derartige dünnwandige Strukturen geschaffen werden können, insbesondere bei derartig formkomplexen und hohlen Teilbereichen des Haushaltsgerätebauteils, sondern dieses Formgebilde in Form des Hohlkörpers auch in der Breite sehr schmal gestaltet werden kann. So ist bei der hier gezeigten Ausführung vorgesehen, dass durch das Kombinationsspritzgießen auch ermöglicht ist, dass ein Abstand a1, der sich zwischen einem freien Ende 15 der ersten Seitenwand 10 und einem freien Ende 16 der zweiten Seitenwand 13 bemisst, kleiner oder gleich 14 mm, insbesondere zwischen 11 mm und 14 mm, beträgt. Das freie Ende 15 der ersten Seitenwand 10 mündet an den Wannenboden 7, wohingegen das freie Ende 16 der äußeren Seitenwand 13 an einen Seitenflansch 17 der Wannenform mündet.

Die zwei Seitenwände 10 und 13 dieser Hohlform des Hohlkörpers münden an gegenüberliegenden Enden zu diesen freien Enden 15 und 16 an eine den Hohlkörper des Weiteren begrenzende Bodenwand 18. Die Bodenwand 18 schließt die Rinnenform. Durch das Kombinationsspritzgießen wird es ermöglicht, dass ein Abstand a2 zwischen diesen Seitenwänden 10 und 13 an dieser Anmündung an die Bodenwand 18 und somit quasi auch eine entsprechende Erstreckung der Bodenwand 18 zwischen diesen beiden Seitenwänden 10 und 13 kleiner oder gleich 7 mm, insbesondere zwischen 5 mm und 6,5 mm, hergestellt werden kann. Ein weiterer Abstand a3, der sich zwischen einem freien Ende 15, 16 einer Seitenwand 10, 13 und einem an die Bodenwand 18 mündenden Ende einer Seitenwand 10, 13 bemisst, beträgt hier vorzugsweise kleiner 40 mm und größer 30 mm, insbesondere zwischen 35 mm und 40 mm. Durch eine derartige Ausgestaltung kann somit ein sehr schmaler hohler Holm 8 gebildet werden. Insbesondere ist hier das Verhältnis zwischen der Holmbreite und somit insbesondere dem Abstand a2, zur Holmhöhe und somit insbesondere dem Abstand a3 größer 1:4. Derartig schmale hohle Strukturen mit den vorzugsweise genannten Wanddicken können insbesondere erst durch dieses Kombinationsspritzgießen, wie es oben genannt wurde, hergestellt werden.

Wie darüber hinaus in Fig. 3 zu erkennen ist, und in Fig. 4 eingezeichnet ist, ist ein Radius r1 zwischen einer Außenseite der Seitenwand 10, die somit dem Hohlbereich 14 abgewandt ist, und einer dem länglichen Holm 8 zugewandten Außenseite des Wannenbodens 7 kleiner oder gleich 1,5 mm, insbesondere zwischen 1 mm und 1,5 mm. Ein derartiger Übergang 19 zwischen der Seitenwand 10 und dem Wannenboden 7 ist somit mit einem sehr kleinen Radius hergestellt, was insbesondere erst durch dieses Kombinationsspritzgießen ermöglicht wird. Darüber hinaus ist zu erkennen, dass an einem weiteren Übergang 20, der zwischen Außenseiten der Bodenwand 18 und der Seitenwand 10, als auch insbesondere zwischen der Bodenwand 18 und der Seitenwand 13, ausgebildet ist, mit einem weiteren sehr kleinen Radius r2 erzeugt wird, der kleiner 2,5 mm, insbesondere zwischen 1,5 mm und 2,5 mm, vorzugsweise zwischen 1,8 mm und 2,2 mm hergestellt wird.

Wie in Fig. 1 bis Fig. 3 zu erkennen ist, erstreckt sich der Holm 8 insbesondere geradlinig und weist eine Längsachse A auf. In Richtung dieser Längsachse A ist der Hohlbereich 14 sowohl an einem ersten Ende 21 als auch an einem zweiten Ende 22 geschlossen, wobei hier jeweils Frontwände 23 und 24 ausgebildet sind. In vorteilhafter Weise ist es durch das Kombinationsspritzgießen ebenfalls ermöglicht, dass ein Radius r3, der zwischen einem der Bodenwand 18 abgewandten freien Ende der Frontwand 23 und insbesondere dem Flansch 17 ausgebildet ist, kleiner oder gleich 1,0 mm, insbesondere zwischen 0,4 mm und 1,0 mm, vorzugsweise zwischen 0,4 mm und 0,6 mm, hergestellt wird. Auch hier bezieht sich dieses Radiusmaß auf die dem Hohlbereich 14 abgewandten Außenseiten der Frontwand 23 als auch der Außenseite des Flansches 17. Auch diese Frontwand 23 weist eine Wanddicke kleiner 1,5 mm, insbesondere zwischen 0,6 mm und 1 mm auf.

In einer weiteren vorteilhaften Ausführung wird durch das Kombinationsspritzgießen im Inneren des Hohlkörpers und somit in dem Hohlbereich 14 des Holms 8 zumindest eine Versteifungsrippe 25 erzeugt. In der perspektivischen Schnittdarstellung des Holms 8 in Fig. 5 ist zu erkennen, dass mehrere derartige Versteifungsrippen 25 beabstandet und parallel zueinander in diesem Hohlbereich 14 ausgebildet sind. Auch diese Versteifungsgruppen 25 weisen vorzugsweise eine Wanddicke kleiner 1,5 mm, insbesondere zwischen 0,6 mm und 1 mm, auf.

### Bezugszeichenliste

- 1: Haushaltsgerät
- 2: Gehäuse
- 2a: Innenbehälter
- 3: Aufnahmeraum
- 4: Tür
- 5: Außentür
- 6: Innenverkleidung
- 7: Wannenboden
- 8: Holm
- 9: Holm
- 10: Seitenwand
- 11: Haltenocke
- 12: Haltenocke
- 13: Seitenwand
- 14: Hohlbereich
- 15: freies Ende
- 16: freies Ende
- 17: Seitenflansch
- 18: Bodenwand
- 19: Übergang
- 20: Übergang
- 21: erstes Ende
- 22: zweites Ende
- 23: Frontwand
- 25: Versteifungsrippe
- A: Längsachse
- a1,a2,a3: Abstand
- d: Wanddicke
- r1,r2,r3: Radius

## Patentansprüche

1. Verfahren zum Herstellen eines Haushaltsgerätebauteils (6) für ein Haushaltsgerät (1), bei welchem das Haushaltsgerätebauteil (6) aus Kunststoff durch Spritzgießen hergestellt wird, **dadurch gekennzeichnet, dass** das Spritzgießen zumindest phasenweise als ein Kombinationspritzgießen durch ein Dünnwandspritzgießen und ein Kaskaden-Spritzgießen durchgeführt wird und mit dem Kombinationsspritzgießen zumindest ein als Hohlkörper ausgebildeter Teilbereich (8, 9) des Haushaltsgerätebauteils (6) als länglicher Holm hergestellt wird, wobei den Hohlkörper begrenzende Wände (10, 13, 18, 23, 24) durch das Kombinationspritzgießen mit dem Dünnwandspritzgießen und dem Kaskaden-Spritzgießen mit einer Wanddicke (d) kleiner 1,5 mm, insbesondere zwischen 0,6 mm und 1 mm, hergestellt werden.

2. Verfahren nach Anspruch 1, **dadurch gekennzeichnet, dass** das Dünnwandspritzgießen mit einem Wandicken-Fließweg-Verhältnis von größer 1:200 durchgeführt wird.

3. Verfahren nach Anspruch 2, **dadurch gekennzeichnet, dass** das Dünnwandspritzgießen mit einem Wandicken-Fließweg-Verhältnis zwischen größer 1:200 und 1:300 durchgeführt wird.

4. Verfahren nach einem der vorhergehenden Ansprüche, **dadurch gekennzeichnet, dass** der als längliche Holm (8, 9) rinnenartig und/oder geradlinig hergestellt wird.

5. Verfahren nach einem der vorhergehenden Ansprüche, **dadurch gekennzeichnet, dass** zwei Seitenwände (10, 13) der Holmform des Hohlkörpers an ihren freien Enden (15, 16) durch das Kombinationspritzgießen mit dem Dünnwandspritzgießen und dem Kaskaden-Spritzgießen mit einem Abstand (a1) kleiner oder gleich 14 mm, insbesondere zwischen 11 mm und 14 mm, hergestellt werden.

6. Verfahren nacheinem der vorhergehenden Ansprüche , **dadurch gekennzeichnet, dass** zwei Seitenwände (10, 13) der Holmform des Hohlkörpers an ihren an eine Bodenwand (18) der Rinnenform mündenden Enden durch das Kombinationspritzgießen mit dem Dünnwandspritzgießen und dem Kaskaden-Spritzgießen mit einem Abstand (a2) kleiner oder gleich 7 mm, insbesondere zwischen 5 mm und 6,5 mm, hergestellt werden.

7. Verfahren nacheinem der vorhergehenden Ansprüche , **dadurch gekennzeichnet, dass** ein Übergang (19) zwischen einer Außenseite einer Seitenwand (10, 13) und einer Außenseite einer an das freie Ende (15, 16) der Seitenwand (10, 13) mündenden Außenseite eines weiteren Teilbereichs (7) des Haushaltsgerätebauteils (6) durch das Kombinationspritzgießen mit dem Dünnwandspritzgießen und dem Kaskaden-Spritzgießen mit einem Radius (r1) kleiner oder gleich 1,5mm, insbesondere zwischen 1 mm und 1,5 mm, hergestellt wird.

8. Verfahren nacheinem der vorhergehenden Ansprüche , **dadurch gekennzeichnet, dass** eine in Richtung einer Längsachse (A) des Hohlkörpers an einem Ende (21, 22) des Hohlkörpers eine Frontwand (23, 24) ausgebildet wird, welche an eine Bodenwand (18) des Hohlkörpers mündet, wobei ein Übergang zwischen einer Außenseite der Frontwand (23, 24) und einer Außenseite der Bodenwand (18) durch das Kombinationspritzgießen mit dem Dünnwandspritzgießen und dem Kaskaden-Spritzgießen mit einem Radius kleiner oder gleich 2,5 mm, insbesondere zwischen 1,5 mm und 2,0 mm, hergestellt wird und/oder ein Übergang zwischen einer Außenseite der Frontwand (23, 24) und einer Außenseite einer an das freie Ende der Frontwand (23, 24) mündenden Außenseite eines weiteren Teilbereichs (7) des Haushaltsgerätebauteils (6) durch das Kombinationspritzgießen mit dem Dünnwandspritzgießen und dem Kaskaden-Spritzgießen mit einem Radius (r3) kleiner oder gleich 1,0 mm, insbesondere zwischen 0,4 mm und 1,0 mm, hergestellt wird.

9. Verfahren nach einem der vorhergehenden Ansprüche , **dadurch gekennzeichnet, dass** an einer Außenseite einer Seitenwand (10, 13) des Hohlkörpers eine dem Hohlbereich (14) des Hohlkörpers abgewandte Aufnahmestruktur (11, 12), insbesondere eine Haltenocke, durch das Kombinationspritzgießen mit dem Dünnwandspritzgießen und dem Kaskaden-Spritzgießen hergestellt wird.

10. Verfahren nach einem der vorhergehenden Ansprüche, **dadurch gekennzeichnet, dass** in dem Hohlbereich (14) des Hohlkörpers zumindest eine Versteifungsrippe (25) durch das Kombinationspritzgießen mit dem Dünnwandspritzgießen und dem Kaskaden-Spritzgießen hergestellt wird.

11. Verfahren nach einem der vorhergehenden Ansprüche, **dadurch gekennzeichnet, dass** als Haushaltsgerätebauteil ein wannenförmiges Haushaltsgerätebauteil (6) hergestellt wird, insbesondere ein als Teilbereich ausgebildeter Wannenboden (7) des herzustellenden wannenförmigen Haushaltsgerätebauteils (6) mit einem viereckigen Flächenbereich mit einer ersten Seitenlänge, insbesondere einer Breite, von zumindest 30 cm und/oder einer zweiten Seitenlänge, insbesondere einer Höhe, von zumindest 25 cm hergestellt wird, an dem der Hohlkörper einstückig durch das Kombinationspritzgießen mit dem Dünnwandspritzgießen und dem Kaskaden-Spritzgießen ausgebildet wird.

12. Verfahren nach einem der vorhergehenden Ansprüche, **dadurch gekennzeichnet, dass** als Haushaltsgerätebauteil eine Innenverkleidung (6) einer Tür (4) für ein Haushaltskältegerät (1) einstückig durch das Kombinationspritzgießen mit dem Dünnwandspritzgießen und dem Kaskaden-Spritzgießen hergestellt wird.

13. Haushaltsgerätebauteil (6), welches nach einem Verfahren gemäß einem der vorhergehenden Ansprüche hergestellt ist.

## Claims

1. Method for producing a household appliance component (6) for a household appliance (1), in which the household appliance component (6) is produced from plastic by injection moulding, **characterised in that** the injection moulding is carried at least in some phases as a combined injection moulding process with thin-wall injection moulding and cascade injection moulding and at least one partial region (8, 9) formed as a hollow body of the household appliance component (6) is produced as an elongate bar by means of the combined injection moulding process, wherein walls (10, 13, 18, 23, 24) bounding the hollow body are produced by the combined injection moulding process with thin-wall injection moulding and cascade injection moulding with a wall thickness (d) of less than 1.5 mm, in particular between 0.6 mm and 1 mm.

2. Method according to claim 1, **characterised in that** thin-wall injection moulding is carried out with a wall-thickness-flow length ratio of greater than 1:200.

3. Method according to claim 2, **characterised in that** thin-wall injection moulding is carried out with a wall-thickness-flow length ratio between greater than 1:200 and 1:300.

4. Method according to one of the preceding claims, **characterised in that** the elongate bar (8, 9) is produced in a groove shape and/or as a straight line.

5. Method according to one of the preceding claims, **characterised in that** two side walls (10, 13) of the bar shape of the hollow body are produced at their free ends (15, 16) by the combined injection moulding process with thin-wall injection moulding and cascade injection moulding with a distance (a1) smaller than or equal to 14 mm, in particular between 11 mm and 14 mm.

6. Method according to one of the preceding claims, **characterised in that** two side walls (10, 13) of the bar shape of the hollow body are produced at their ends opening onto a base wall (18) of the groove shape by the combined injection moulding process with thin-wall injection moulding and cascade injection moulding with a distance (a2) smaller than or equal to 7 mm, in particular between 5 mm and 6.5 mm.

7. Method according to one of the preceding claims, **characterised in that** a transition (19) between an outer side of a side wall (10, 13) and an outer side of an outer side of a further partial region (7) of the household appliance component (6) opening onto the free end (15, 16) of the side wall (10, 13) is produced by the combined injection moulding process with thin-wall injection moulding and cascade injection moulding with a radius (r1) smaller than or equal to 1.5 mm, in particular between 1 mm and 1.5 mm.

8. Method according to one of the preceding claims, **characterised in that** a front wall (23, 24) is formed in the direction of a longitudinal axis (A) of the hollow body at one end (21, 22) of the hollow body, which opens onto a base wall (18) of the hollow body, wherein a transition between an outer side of the front wall (23, 24) and an outer side of the base wall (18) is produced by the combined injection moulding process with thin-wall injection moulding and cascade injection moulding with a radius smaller than or equal to 2.5 mm, in particular between 1.5 mm and 2.0 mm, and/or a transition between an outer side of the front wall (23, 24) and an outer side of an outer side of a further partial region (7) of the household appliance (6) component opening onto the free end of the front wall (23, 24) is produced by the combined injection moulding process with thin-wall injection moulding and cascade injection moulding with a radius (r3) smaller than or equal to 1.0 mm, in particular between 0.4 mm and 1.0 mm.

9. Method according to one of the preceding claims, **characterised in that** on an outer side of a side wall (10, 13) of the hollow body, a receiving structure (11, 12) facing away from the hollow region (14) of the hollow body, in particular a holding lug, is produced by the combined injection moulding process with thin-wall injection moulding and cascade injection moulding.

10. Method according to one of the preceding claims, **characterised in that** in the hollow region (14) of the hollow body, at least one reinforcing rib (25) is produced by the combined injection moulding process with thin-wall injection moulding and cascade injection moulding.

11. Method according to one of the preceding claims, **characterised in that** a trough-shaped household appliance component (6) is produced as the household appliance component, in particular a trough base (7) as partial region of the trough-shaped household appliance component (6) to be produced is produced with a quadrangular planar region with a first side length, in particular a width, of at least 30 cm and/or a second side length, in particular a height, of at least 25 cm on which the hollow body is formed in one piece by the combined injection moulding process with thin-wall injection moulding and cascade injection moulding.

12. Method according to one of the preceding claims, **characterised in that** an inner lining (6) of a door (4) for a household refrigeration appliance (1) is produced in one piece by the combined injection moulding process with thin-wall injection moulding and cascade injection moulding as the household appliance component.

13. Household appliance component (6), which is produced according to a method according to one of the preceding claims.

## Revendications

1. Procédé de fabrication d'un composant d'appareil ménager (6) pour un appareil ménager (1), dans lequel le composant d'appareil ménager (6) est fabriqué en plastique moulé par injection, **caractérisé en ce que** le moulage par injection est effectué au moins par phases sous la forme d'un moulage par injection combiné via un moulage par injection de parois minces et un moulage par injection en cascade et le moulage par injection combiné sert à fabriquer au moins une zone partielle (8, 9) du composant d'appareil ménager (6) sous forme de corps creux et constituant un montant longitudinal, dans lequel des parois limitant le corps creux (10, 13, 18, 23, 24) sont fabriquées en ayant recours au moulage par injection combiné associant le moulage par injection de parois minces au moulage par injection en cascade selon une épaisseur de paroi (d) inférieure à 1,5 mm, en particulier entre 0,6 mm et 1 mm.

2. Procédé selon la revendication 1, **caractérisé en ce que** le moulage par injection de parois minces s'effectue selon un rapport épaisseurs de parois-trajet de flux supérieur à 1:200.

3. Procédé selon la revendication 2, **caractérisé en ce que** le moulage par injection de parois minces s'effectue selon un rapport épaisseurs de parois-trajet de flux situé entre plus de 1:200 et 1:300.

4. Procédé selon l'une des revendications précédentes, **caractérisé en ce que** le montant longitudinal (8, 9) est fabriqué en forme de sillon et/ou de façon rectiligne.

5. Procédé selon l'une des revendications précédentes, **caractérisé en ce que** deux parois latérales (10, 13) de la forme de montant du corps creux sont fabriquées en leurs extrémités libres (15, 16) via le moulage par injection combiné associant le moulage par injection de parois minces au moulage par injection en cascade selon un espacement (a1) inférieur ou égal à 14 mm, en particulier entre 11 mm et 14 mm.

6. Procédé selon l'une des revendications précédentes, **caractérisé en ce que** deux parois latérales (10, 13) de la forme de montant du corps creux sont fabriquées en leurs extrémités débouchant en une paroi de fond (18) de la forme de sillon via le moulage par injection combiné associant le moulage par injection de parois minces au moulage par injection en cascade selon un espacement (a2) inférieur ou égal à 7 mm, en particulier entre 5 mm et 6,5 mm.

7. Procédé selon l'une des revendications précédentes, **caractérisé en ce qu'**une transition (19) entre un côté extérieur d'une paroi latérale (10, 13) et un côté extérieur d'une zone partielle (7) supplémentaire du composant d'appareil ménager (6) débouchant en l'extrémité libre (15, 16) de la paroi latérale (10, 13) est fabriquée via le moulage par injection combiné associant le moulage par injection de parois minces au moulage par injection en cascade selon un rayon (r1) inférieur ou égal à 1,5 mm, en particulier entre 1 mm et 1,5 mm.

8. Procédé selon l'une des revendications précédentes, **caractérisé en ce qu'**une paroi avant (23, 24) est formée, en direction d'un axe longitudinal (A) du corps creux en une extrémité (21, 22) du corps creux, laquelle paroi débouche en une paroi de fond (18) du corps creux, dans lequel une transition entre un côté extérieur de la paroi avant (23, 24) et un côté extérieur de la paroi de fond (18) est fabriquée via le moulage par injection combiné associant le moulage par injection de parois minces au moulage par injection en cascade selon un rayon inférieur ou égal à 2,5 mm, en particulier entre 1,5 mm et 2,0 mm, et/ou une transition entre un côté extérieur de la paroi avant (23, 24) et un côté extérieur d'une zone partielle (7) supplémentaire du composant d'appareil ménager (6) débouchant en l'extrémité libre de la paroi avant (23, 24) est fabriquée via le moulage par injection combiné associant le moulage par injection de parois minces au moulage par injection en cascade selon un rayon (r3) inférieur ou égal à 1,0 mm, en particulier entre 0,4 mm et 1,0 mm.

9. Procédé selon l'une des revendications précédentes, **caractérisé en ce qu'**une structure d'accueil (11, 12) éloignée de la zone creuse (14) du corps creux, en particulier une came de maintien, est fabriquée via le moulage par injection combiné associant le moulage par injection de parois minces au moulage par injection en cascade en un côté extérieur d'une paroi latérale (10, 13) du corps creux.

10. Procédé selon l'une des revendications précédentes, **caractérisé en ce qu'**au moins une nervure de rigidification (25) est fabriquée via le moulage par injection combiné associant le moulage par injection de parois minces au moulage par injection en cascade dans la zone creuse (14) du corps creux.

11. Procédé selon l'une des revendications précédentes, **caractérisé en ce que** le composant d'appareil ménager fabriqué est un composant d'appareil ménager en forme de bac (6), en particulier un fond de bac (7), formé sous forme de zone partielle, du composant d'appareil ménager (6) en forme de bac à fabriquer avec une zone de surface carrée selon une première longueur de côté, en particulier une largeur, d'au moins 30 cm et/ou une deuxième longueur de côté, en particulier une hauteur, d'au moins 25 cm, sur lequel le corps creux est formé en une seule pièce via le moulage par injection combiné associant le moulage par injection de parois minces au moulage par injection en cascade.

12. Procédé selon l'une des revendications précédentes, **caractérisé en ce que** le composant d'appareil ménager fabriqué est un revêtement intérieur (6) d'une porte (4) pour un appareil frigorifique ménager (1) réalisé en une seule pièce via le moulage par injection combiné associant le moulage par injection de parois minces au moulage par injection en cascade.

13. Composant d'appareil ménager (6) fabriqué suivant un procédé selon l'une des revendications précédentes.
